# EUROPEAN PATENT APPLICATION

(11) **EP 4 800 625 A1**
(43) Date of publication of application: **02.09.2026**
(21) Application number: 26158667.1
(22) Date of filing: 14.02.2026
(51) Int. Cl.: G06Q 10/20

(54) **WORK ORDER MANAGEMENT SYSTEM FOR MANAGING NON-CONFORMANCE ANOMALIES IN A STRUCTURE AND ASSOCIATED METHOD AND SYSTEM**

(30) Priority: 28.02.2025 US 202563765186 P; 06.02.2026 US 202619532069
(71) Applicant: The Boeing Company, Arlington, VA 22202 (US)
(72) Inventor: PATE, Benjamin, Arlington, 22202 (US); PAPORELLO, Gregg, Arlington, 22202 (US); CUNDIFF, Tim, Arlington, 22202 (US); GILL, Perry, Arlington, 22202 (US)
(74) Representative: Bryn-Jacobsen, Caelia

(57) **Abstract**

A structured inspection management system, method, and non-transitory computer-readable medium are disclosed for managing anomalies. The system organizes a plurality of inspection orders, each associated with an anomaly and defining inspection criteria for performing an inspection. The system presents inspection criteria for a selected inspection order and enforces restriction of allowable input to a predefined set of structured inspection responses associated with performance of the inspection. Based on at least one structured inspection response, the system automatically determines and stores an inspection status for the selected inspection order. When the inspection status indicates that the anomaly remains unresolved, the inspection order is maintained in an incomplete state for subsequent inspection or corrective action.

## Description

### CROSS-REFERENCE TO RELATED APPLICATION

This application claims the benefit of U.S. Provisional Patent Application No. 63/765,186, filed February 28, 2025.

### FIELD

This disclosure relates generally to inspection management systems, and more particularly to systems and methods for managing inspection activities associated with anomalies using structured inspection responses.

### BACKGROUND

Managing inspection activities associated with anomalies in large or complex structures, such as aircraft, rockets, microchips, and other assemblies, can present significant challenges due to the volume, complexity, and distribution of anomalies. Conventional inspection management approaches often rely on unstructured or freeform inspection inputs, fragmented data handling, and rigid integration with existing quality management systems, which can result in inefficiencies, inconsistent inspection outcomes, and difficulty maintaining traceability across inspection activities.

In addition, many existing inspection workflows provide limited coordination between inspection criteria, inspection responses, and inspection status, and are not well suited for use across hybrid digital and manual inspection environments. Inspection activities may be performed using a combination of paper-based records and electronic systems that do not operate cohesively, increasing the risk of errors, complicating record synchronization, and reducing confidence in inspection results.

### SUMMARY

The subject matter of the present application has been developed in response to the present state of the art, and particularly in response to the shortcomings associated with conventional inspection management approaches that have not yet been fully solved by currently available techniques. Accordingly, the subject matter of the present application has been developed to provide systems and methods for structured inspection management that overcome at least some of the above-mentioned shortcomings of prior art techniques.

The following is a non-exhaustive list of examples, which may or may not be claimed, of the subject matter, disclosed herein.

Disclosed herein is a structured inspection management system. The system includes an inspection organization module that organizes a plurality of inspection orders. Each inspection order is associated with an anomaly and defines inspection criteria for performing an inspection associated with the anomaly. The system also includes a display module that presents the inspection criteria for a selected inspection order. The system further includes a response enforcement module that restricts user input for the selected inspection order to a predefined set of structured inspection responses associated with performance of the inspection. Additionally, the system includes a status tracking module that automatically determines and stores an inspection status for the selected inspection order based on at least one structured inspection response. The preceding subject matter of this paragraph characterizes example 1 of the present disclosure.

The structured inspection management system further includes a traceability module configured to record traceability data for each structured inspection response selected via the response enforcement module. The traceability data enables identification of at least one of a source or timing of the structured inspection response. The preceding subject matter of this paragraph characterizes example 2 of the present disclosure, wherein example 2 also includes the subject matter according to example 1, above.

In a manual workflow mode, the inspection criteria and the predefined set of structured inspection responses are provided on a physical inspection record, at least one structured inspection response recorded on the physical inspection record is subsequently entered into the response enforcement module via an electronic interface, and the inspection status is determined based on the structured inspection response received via the electronic interface. The preceding subject matter of this paragraph characterizes example 3 of the present disclosure, wherein example 3 also includes the subject matter according to any of examples 1 or 2, above.

In a digital workflow mode, the inspection criteria and the predefined set of structured inspection responses are presented via an electronic interface, and the inspection status is determined based on the structured inspection response received via the electronic interface. The preceding subject matter of this paragraph characterizes example 4 of the present disclosure, wherein example 4 also includes the subject matter according to any of examples 1-3, above.

Each inspection order includes a plurality of inspection phases, and the response enforcement module restricts the predefined set of structured inspection responses based on a current inspection phase. The preceding subject matter of this paragraph characterizes example 5 of the present disclosure, wherein example 5 also includes the subject matter according to any of examples 1-4, above.

In one example, an initial inspection phase includes a predefined set of structured inspection responses indicative of whether a condition associated with the anomaly exists. The preceding subject matter of this paragraph characterizes example 6 of the present disclosure, wherein example 6 also includes the subject matter according to example 5, above.

In another example, a resolution inspection phase following corrective action includes a predefined set of structured inspection responses indicative of acceptance or rejection of a condition of the anomaly. The preceding subject matter of this paragraph characterizes example 7 of the present disclosure, wherein example 7 also includes the subject matter according to example 5, above.

In some examples, the status tracking module determines the inspection status based on both the selected structured inspection response and the current inspection phase of the selected inspection order. The preceding subject matter of this paragraph characterizes example 8 of the present disclosure, wherein example 8 also includes the subject matter according to example 5, above.

The status tracking module maintains the selected inspection order in an incomplete state when the structured inspection response indicates that the anomaly remains unresolved. The preceding subject matter of this paragraph characterizes example 9 of the present disclosure, wherein example 9 also includes the subject matter according to any of examples 1-8, above.

Each inspection order is associated with the anomaly via anomaly identification data comprising a unique anomaly identifier. The preceding subject matter of this paragraph characterizes example 10 of the present disclosure, wherein example 10 also includes the subject matter according to any of examples 1-9, above.

Each inspection order is associated with anomaly-related information including anomaly identification information, anomaly description information, and anomaly location information. The preceding subject matter of this paragraph characterizes example 11 of the present disclosure, wherein example 11 also includes the subject matter according to any of examples 1-10, above.

The inspection organization module populates the plurality of inspection orders from one or more data sources, including locally stored data, manually uploaded data, or externally retrieved data. The preceding subject matter of this paragraph characterizes example 12 of the present disclosure, wherein example 12 also includes the subject matter according to any of examples 1-11, above.

The display module presents inspection visual data associated with the anomaly, where the inspection visual data includes one or more of images, diagrams, or maps. The preceding subject matter of this paragraph characterizes example 13 of the present disclosure, wherein example 13 also includes the subject matter according to any of examples 1-12, above.

Further disclosed herein is a method for structured anomaly inspection management. The method includes accessing a selected inspection order associated with an anomaly and presenting inspection criteria for the selected inspection order. The method also includes enforcing restriction of allowable input to a predefined set of structured inspection responses associated with performance of the inspection and receiving at least one structured inspection response selected from the predefined set. The method further includes automatically determining and storing an inspection status for the selected inspection order based on the structured inspection response. The inspection order is maintained in an incomplete state when the inspection status indicates that the anomaly remains unresolved. The preceding subject matter of this paragraph characterizes example 14 of the present disclosure.

The method further includes recording traceability data associated with receiving the structured inspection response. The preceding subject matter of this paragraph characterizes example 15 of the present disclosure, wherein example 15 also includes the subject matter according to example 14, above.

The traceability data includes at least one of a source or timing of the structured inspection response. The preceding subject matter of this paragraph characterizes example 16 of the present disclosure, wherein example 16 also includes the subject matter according to example 15, above.

The selected inspection order includes a plurality of inspection phases, and enforcing restriction of allowable input includes enforcing selection from a predefined set of structured inspection responses corresponding to a current inspection phase. The preceding subject matter of this paragraph characterizes example 17 of the present disclosure, wherein example 17 also includes the subject matter according to any of examples 14-16, above.

The method further includes tracking a number of inspection attempts associated with the selected inspection order, each inspection attempt corresponding to receipt of at least one structured inspection response. The preceding subject matter of this paragraph characterizes example 18 of the present disclosure, wherein example 18 also includes the subject matter according to any of examples 14-17, above.

Enforcing restriction of allowable input includes preventing entry of freeform inspection responses. The preceding subject matter of this paragraph characterizes example 19 of the present disclosure, wherein example 19 also includes the subject matter according to any of examples 14-18, above.

Further disclosed herein is a non-transitory computer-readable medium stores instructions that, when executed by one or more processors, cause the processors to access a selected inspection order associated with an anomaly, present inspection criteria for the selected inspection order, enforce restriction of allowable input to a predefined set of structured inspection responses associated with performance of an inspection, receive at least one structured inspection response selected from the predefined set, and automatically determine and store an inspection status for the selected inspection order. The inspection order is maintained in an incomplete state when the anomaly remains unresolved. The preceding subject matter of this paragraph characterizes example 20 of the present disclosure.

The described features, structures, advantages, and/or characteristics of the subject matter of the present disclosure may be combined in any suitable manner in one or more examples and/or implementations. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example or implementation. In other instances, additional features and advantages may be recognized in certain examples and/or implementations that may not be present in all examples or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims, or may be learned by the practice of the subject matter as set forth hereinafter.

### BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings, which are not necessarily drawn to scale, depict only certain examples of the subject matter and are not therefore to be considered to be limiting of its scope, the subject matter will be described and explained with additional specificity and detail through the use of the drawings, in which:
Figure 1 is a schematic block diagram of one example of a structured inspection management system, according to one or more examples of the present disclosure;
Figure 2 is a schematic representation of one example of an inspection order interface showing a plurality of inspection orders and associated inspection order information, according to one or more examples of the present disclosure;
Figure 3A is a schematic representation of one example of an inspection interface for a selected inspection order, showing inspection order-related information, inspection criteria, and a response field associated with a predefined set of structured inspection responses, according to one or more examples of the present disclosure;
Figure 3B is a schematic representation of one example presentation of a predefined set of structured inspection responses associated with the response field of Figure 3A, according to one or more examples of the present disclosure;
Figure 3C is a schematic representation of one example presentation of a selected structured inspection response for the response field of Figure 3A, and the corresponding automatic update of inspection status information, according to one or more examples of the present disclosure;
Figure 4 is a schematic representation of one example of a physical inspection record used in a manual workflow mode, illustrating inspection criteria and structured inspection response options recorded on the physical inspection record, according to one or more examples of the present disclosure; and
Figure 5 is a flow diagram of a method for structured inspection management, according to one or more examples of the present disclosure.

### DETAILED DESCRIPTION

Reference throughout this specification to "one example," "an example," or similar language means that a particular feature, structure, or characteristic described in connection with the example is included in at least one example of the present disclosure. Appearances of the phrases "in one example," "in an example," and similar language throughout this specification may, but do not necessarily, all refer to the same example. Similarly, the use of the term "implementation" means an implementation having a particular feature, structure, or characteristic described in connection with one or more examples of the present disclosure, however, absent an express correlation to indicate otherwise, an implementation may be associated with one or more examples.

Disclosed herein is a structured inspection management system for managing anomalies associated with a structure. As used herein, anomalies refer to conditions that deviate from predefined design, manufacturing, operational, or maintenance criteria, and may include, but not limited to, defects or other non-conforming conditions affecting the performance, integrity, reliability, or appearance of the structure. Such anomalies can arise from manufacturing inconsistencies, material degradation, assembly errors, environmental damage, operational stresses, fatigue, or other factors that cause a component or system to fall outside acceptable tolerances. Anomalies may vary in size and severity, ranging from minor surface imperfections to large-scale structural conditions that may impact operational suitability, safety margins, or long-term reliability if not appropriately addressed.

In general terms, the disclosed structured inspection management system organizes inspection orders associated with anomalies, presents inspection criteria for a selected inspection order, restricts inspection input to a predefined set of structured inspection responses, and automatically determines and tracks inspection status based on the structured inspection responses. The system applies this structured inspection logic consistently regardless of whether inspection activities are performed using electronic interfaces, physical records, or a combination thereof. The structured inspection management system supports operation across digital, manual, and hybrid inspection workflows, including use in both connected and offline environments. By enforcing structured inspection responses and system-driven inspection status determination across these workflows, the system improves consistency, traceability, and repeatability of inspection activities while reducing ambiguity in inspection outcomes. That is, unlike conventional inspection management systems that rely on freeform inspection input and manual interpretation of inspection outcomes, the disclosed structured inspection management system enforces restriction of allowable inspection input to predefined structured inspection responses and automatically determines inspection status based on those responses. In other words, the disclosed system enforces inspection outcome selection and derives inspection status without subjective interpretation.

The disclosed system may be beneficial for large and/or complex structures and assemblies, such as aircraft, ships, industrial equipment, or large infrastructure components, where anomaly information is often geographically distributed and/or operationally complex. In such environments, the structured inspection management approach provided by the disclosed system supports improves coordination across distributed personnel and systems, promotes consistent inspection execution, and facilitates more efficient inspection activities across multiple operational contexts. In one non-limiting example, the structured inspection management system may be used in an aircraft manufacturing or maintenance environment to manage inspection activities associated with anomalies identified across different aircraft sections, production stages, or inspection phases.

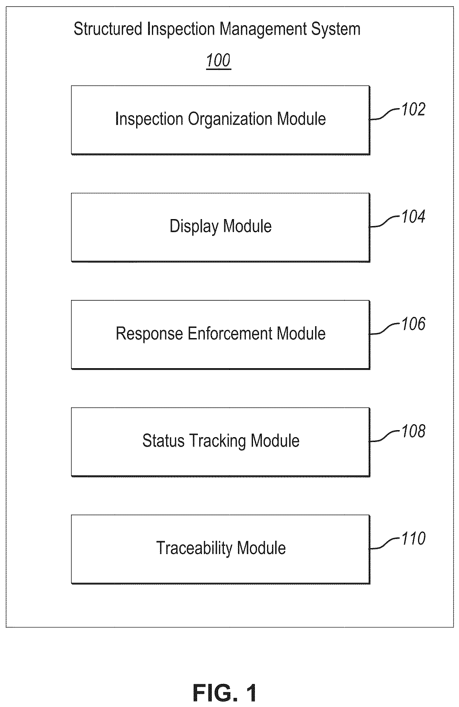

Referring to Figure 1, according to one example, a structured inspection management system 100 for managing anomalies associated with a structure is shown. The structured inspection management system 100 provides a unified and systematic framework for managing inspection activities associated with anomalies throughout one or more inspection lifecycles. In general, the system 100 is configured to organize inspection orders associated with anomalies, present inspection criteria associated with a selected inspection order, enforce the use of structured inspection responses during inspection activities, and automatically determine and track inspection status based on those responses.

The structured inspection management system 100 is configured to support inspection activities performed across multiple environments, including digital, manual, and hybrid workflows, and may operate in both connected and offline conditions. By applying consistent response logic independent of how inspection interactions are conducted, the system 100 can reduce ambiguity in inspection execution, improves traceability of inspection outcomes, and promotes repeatable and auditable inspection processes. In this manner, the structured inspection management system 100 provides a foundational inspection management capability that supports coordinated inspection activities across distributed personnel, locations, and inspection phases without relying on freeform input or ad hoc status determination.

The structured inspection management system 100 is applicable to a wide range of structures, including but not limited to aircraft, ships, industrial machinery, microchips, and large-scale infrastructure components. As used herein, a structure may include any physical assembly, system, or component subject to inspection for anomalies, and may be composed of multiple interconnected components, materials, or subsystems. Anomalies associated with such structures may vary in size and severity, ranging from minor surface imperfections to larger conditions that impact performance, safety, reliability, or operational suitability. In these environments, inspection activities associated with anomalies may be performed at different stages of manufacturing, assembly, inspection, maintenance, or repair, and may involve multiple inspectors, processes, and operational contexts. As a result, inspection activities are frequently conducted across disparate systems, locations, and workflows, creating challenges in ensuring consistent inspection execution, response handling, and inspection status determination.

In some examples, the structured inspection management system may be deployed in environments where inspection activities are performed by multiple parties across different locations or organizational boundaries. For example, in aerospace manufacturing or assembly environments, inspections may be performed at supplier facilities, during intermediate production stages, or prior to final delivery of a structure. The structured inspection management system enables inspection orders, structured inspection responses, and inspection status to be consistently recorded and tracked across such environments in an auditable manner. For example, the system may be used to support inspection activities performed upstream in a supply chain, enabling anomalies to be verified and resolved prior to integration into downstream assemblies. By enforcing structured inspection responses and system-driven inspection status determination, the system helps reduce unresolved anomalies and supports coordination between different organizations or inspection teams.

In some examples, the structured inspection management system 100 includes a plurality of modules that collectively support structured inspection management. For example, and without limitation, the system 100 may include an inspection organization module 102, a display module 104, a response enforcement module 106, a status tracking module 108, and, in some examples, a traceability module 110. The arrangement, inclusion, and functionality of the modules shown in Figure 1 are illustrative, and in other examples the system 100 may include additional modules, fewer modules, or different combinations of modules. In some examples, functionality associated with one or more of the modules may be combined, distributed across multiple systems, or performed at least in part through manual or hybrid digital and manual workflows.

The inspection organization module 102 is configured to organize, manage, and retrieve a plurality of inspection orders, where each inspection order is associated with an anomaly in a structure. Additionally, each inspection order defines inspection criteria for performing one or more inspection activities associated with the anomaly. The inspection organization module 102 provides a structured framework for managing inspection orders throughout one or more inspection lifecycles, including creation, selection, retrieval, and re-queuing of inspection orders based on inspection outcomes.

In some examples, the inspection organization module 102 populates and manages inspection orders using data obtained from one or more data sources. Data sources may include at least one of locally stored data, manually uploaded data, or externally retrieved data. This multi-source capability enables the structured inspection management system 100 to support automated, manual, and hybrid inspection workflows, and to operate in environments where inspection information may originate from different systems, tools, or record formats. Inspection orders may be stored or represented in various forms, including electronic data structures, structured files, or physical records, depending on the implementation of the structured inspection management system 100.

The display module 104 is configured to present inspection-related information for inspection orders in a structured manner. In some examples, the display module 104 presents information associated with a selected inspection order, including inspection criteria defined for the inspection order, inspection status information, and anomaly-related information associated with the inspection order. In other examples, the display module 104 presents information for a plurality of inspection orders to enable a user to view, compare, or manage inspection activities across multiple inspection orders. The display module 104 enables users to review inspection orders, understand inspection requirements, and monitor inspection status as inspection activities progress, either at an individual level or across multiple inspection orders.

In some examples, the display module 104 provides an electronic interface through which inspection-related information is presented to a user, such as a graphical user interface displaying inspection orders and associated inspection data. In other implementations, the display module 104 supports presentation of inspection information in non-electronic formats, including printed or physical inspection records, to support manual or offline inspection workflows. The display module 104 may present inspection-related information in various visual arrangements, including tabular views, lists, or other layouts, depending on the implementation of the structured inspection management system 100 and the operational context.

The display module 104 may be further configured to present inspection visual data associated with an anomaly. The inspection visual data may include one or more visual representations that provide spatial or contextual information regarding the anomaly, including, without limitation, images, diagrams, or maps. Such inspection visual data may be presented in association with an inspection order to assist users in understanding the location, context, or characteristics of the anomaly during inspection activities.

The response enforcement module 106 is configured to control and restrict user input to allowable inspection input for inspection orders. In particular, the response enforcement module 106 restricts user input for a selected inspection order to a predefined set of structured inspection responses associated with performance of the inspection. The predefined structured inspection responses represent permitted inspection outcomes and are configured to be selected by a user rather than entered as freeform or unstructured text. By limiting allowable input to predefined structured inspection responses, the response enforcement module 106 reduces ambiguity in inspection outcomes and promotes consistent inspection execution across different workflows and environments. This structured response enforcement enables inspection activities to be performed consistently across different inspectors, locations, and operational contexts, including digital, manual, and hybrid inspection workflows, while providing a reliable basis for subsequent inspection status determination and inspection tracking. In some examples, the predefined set of structured inspection responses may be configurable prior to inspection execution but is fixed during performance of a given inspection order.

In some examples, each inspection order includes a plurality of inspection phases, and the response enforcement module 106 is configured to restrict the predefined set of structured inspection responses based on a current inspection phase of the inspection order. As an inspection order progresses through different inspection phases, the response enforcement module 106 enforces selection from a corresponding predefined set of structured inspection responses associated with the current inspection phase, thereby ensuring that only context-appropriate inspection input is permitted at each phase. In other example, an inspection order only includes a single inspection phase.

In some examples, one of the inspection phases comprises an initial inspection phase in which the predefined set of structured inspection responses includes responses indicative of whether a condition associated with the anomaly exists. In some examples, another inspection phase comprises a resolution inspection phase following corrective action, in which the predefined set of structured inspection responses includes responses indicative of acceptance or rejection of a condition of the anomaly. By phase-controlling allowable inspection responses, the response enforcement module 106 ensures consistent handling of inspection input as inspection orders progress through different stages of inspection activity. In other examples, inspection orders may include additional or alternative inspection phases beyond the initial inspection phase and the resolution inspection phase. Such inspection phases may include, without limitation, verification inspection phases, re-inspection phases, supplemental inspection phases, deferred inspection phases, conditional acceptance phases, or final closure phases. The response enforcement module 106 may restrict allowable inspection responses based on the current inspection phase in each case, in accordance with predefined structured inspection responses associated with the respective phase.

The status tracking module 108 is configured to determine, update, and store an inspection status for inspection orders as inspection activities progress. The status tracking module 108 ensures that each inspection order is consistently classified according to predefined inspection status categories based on structured inspection input received via the response enforcement module 106. In some examples, the status tracking module 108 automatically determines the inspection status for a selected inspection order based on at least one structured inspection response selected from the predefined set of structured inspection responses. For example, when a structured inspection response indicates that an anomaly condition does not exist or has been satisfactorily addressed, the inspection status may be updated to a completed status. Conversely, when a structured inspection response indicates that an anomaly condition exists or remains unresolved, the inspection status may be maintained in an active or incomplete status to support further inspection or corrective action. An inspection status includes one of a predefined set of inspection status states maintained by the structured inspection management system, each inspection status state representing a system-recognized outcome of the inspection.

In some examples, the status tracking module 108 supports inspection orders having a plurality of inspection phases and determines inspection status in a manner that reflects progression through the inspection phases. In other words, the status tracking module 108 determined the inspection status for a selected inspection order based on both the at least one structured inspection response and the current inspection phase of the inspection order. For example, an inspection order may remain in an incomplete status across multiple inspection phases until a structured inspection response corresponding to a later inspection phase indicates an acceptable inspection outcome.

In some examples, the status tracking module 108 performs one or more system actions in response to changes in inspection status. For example, inspection orders maintained in an incomplete status may be re-queued for subsequent inspection activities, while inspection orders updated to a completed status may be restricted from further modification unless reactivated by an authorized user. In some examples, the status tracking module 108 may also generate notifications or alerts when inspection status conditions are met, such as inspection orders remaining incomplete for a threshold period of time.

The structured inspection management system 100 may further include a traceability module 110 configured to record traceability data associated with inspection activities performed for inspection orders. In some examples, the traceability module 110 records traceability data enabling identification of at least one of a source or timing associated with structured inspection responses and inspection status updates for an inspection order.

In some examples, traceability data recorded by the traceability module 110 may include, without limitation, one or more of a user identifier, a response timestamp, a system identifier, or other metadata associated with inspection-related actions. Such actions may include creation or selection of an inspection order, entry of structured inspection responses via the response enforcement module 106, inspection status determination by the status tracking module 108, or re-queuing or completion of an inspection order. By recording traceability data in association with structured inspection responses and inspection status changes, the traceability module 110 may provide an auditable inspection history for inspection orders. This traceability supports accountability, review, and compliance requirements across different inspection workflows and operational environments, including digital, manual, and hybrid inspection workflows.

In some examples, traceability data recorded by the traceability module 110 may include one or more identifiers that correspond to records maintained in external systems, such as quality management systems or anomaly tracking systems used by other organizations. For example, an inspection order identifier or anomaly identifier maintained by the structured inspection management system 100 may be associated with a corresponding record or reference identifier in an external system. Such identifier-based associations enable cross-system traceability of inspection activity without requiring direct system integration or modification of external records. This enables the structured inspection management system 100 to be used across multiple organizations or systems while maintaining consistent, structured inspection response capture and inspection status determination.

The structured inspection management system 100 may be configured to operate in a manual workflow mode. In the manual workflow mode, inspection criteria and the predefined set of structured inspection responses associated with an inspection order are provided on a physical inspection record, such as a printed document or other non-electronic medium. Inspection activities associated with the anomaly may be performed on the structure in accordance with the inspection criteria using the physical inspection record, and at least one structured inspection response reflecting the inspection activities may subsequently be entered into the response enforcement module 106 via an electronic interface. That is, entry of the structured inspection response occur after performance of the inspection, as part of a separate data-entry or synchronization step, and not contemporaneously with inspection performance. In the manual workflow mode, the status tracking module 108 determines the inspection status for the inspection order based on the at least one structured inspection response received via the electronic interface. In this manner, the structured inspection management system 100 maintains consistent enforcement of structured inspection responses and system-driven inspection status determination, even when inspection activities are initially performed using physical records. Although inspection activities may be performed using physical inspection records in the manual workflow mode, structured inspection responses are ultimately entered into the structured inspection management system 100 to enable response enforcement and system-driven inspection status determination. In other words, inspection orders initially handled using physical inspection records are subsequently digitized or synchronized with the structured inspection management system 100 to maintain a unified inspection record.

The structured inspection management system 100 may also be configured to operate in a digital workflow mode. In the digital workflow mode, inspection criteria and the predefined set of structured inspection responses associated with an inspection order are presented via an electronic interface, such as a graphical user interface generated by the display module 104. Inspection activities associated with the anomaly may be performed on the structure in accordance with the inspection criteria, and at least one structured inspection response reflecting the inspection activities may be entered via the electronic interface and received by the response enforcement module 106. In the digital workflow mode, the status tracking module 108 determines the inspection status for the inspection order based on the at least one structured inspection response received via the electronic interface. The digital workflow mode enables real-time or near-real-time inspection status determination and tracking.

In some examples, the structured inspection management system 100 supports seamless transition between manual and electronic workflows. Inspection orders may be partially completed using physical inspection records and subsequently uploaded, entered, or synchronized with the structured inspection management system 100 without loss of inspection data or traceability. This hybrid capability allows inspection activities to continue uninterrupted during transitions between paper-based and electronic processes while maintaining consistent enforcement of structured inspection responses and system-driven inspection status determination.

In some examples, each inspection order managed by the structured inspection management system 100 is associated with a corresponding anomaly via anomaly identification data. The anomaly identification data may include a unique anomaly identifier that enables the inspection order to be consistently linked to the associated anomaly across different system components, workflows, and inspection activities. Additionally, each inspection order may be further associated with anomaly-related information describing the associated anomaly. Such anomaly-related information may include, without limitation, anomaly identification information, anomaly description information, and anomaly location information. By associating inspection orders with anomaly-related information, the structured inspection management system 100 enables inspection activities to be performed with appropriate context while maintaining consistent linkage between inspection orders and the anomalies to which they correspond.

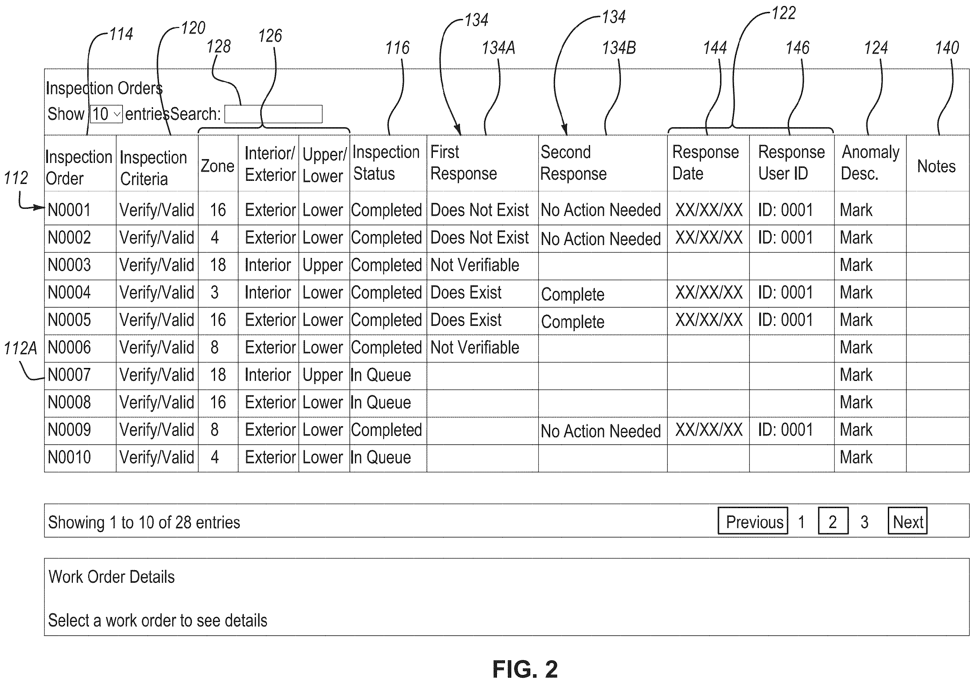

Referring to Figure 2, one non-limiting example of an inspection interface generated by the structured inspection management system 100 is shown. In this example, the inspection interface presents information associated with a plurality of inspection orders each associated with an anomaly, managed by the system, and including anomaly description information, anomaly location information, and structured inspection responses associated with respective inspection orders. The inspection interface of Figure 2 is illustrative and represents one example of how inspection-related information may be visually organized for review and interaction. In other examples, inspection-related information may be presented using different visual layouts, groupings, or interfaces, and the specific information displayed may vary depending on factors such as user role, inspection phase, or operational context. Accordingly, Figure 2 is not intended to limit the structure, functionality, or presentation of the structured inspection management system 100.

In some examples, the inspection interface of Figure 2 is provided by the display module 104 and enables a user to view inspection orders individually or collectively. For example, the inspection interface may present inspection order identifiers, inspection status indicators, and selectable structured inspection responses corresponding to inspection criteria defined for the inspection orders. The inspection interface may further present anomaly-related information and, in some examples, inspection visual data associated with anomalies, such as images, diagrams, or maps, to provide contextual information for inspection activities.

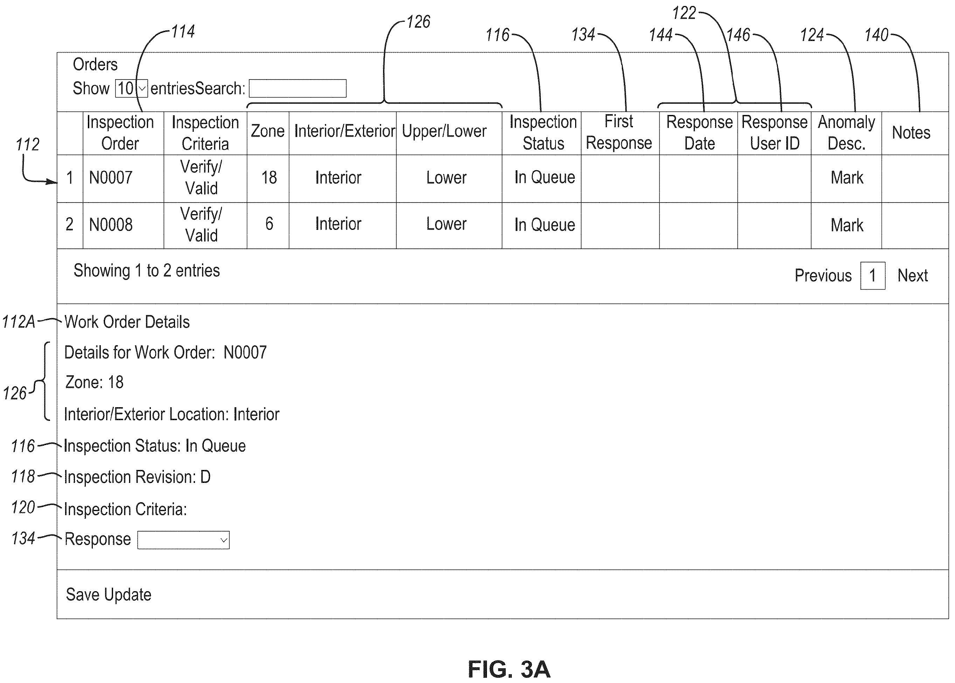

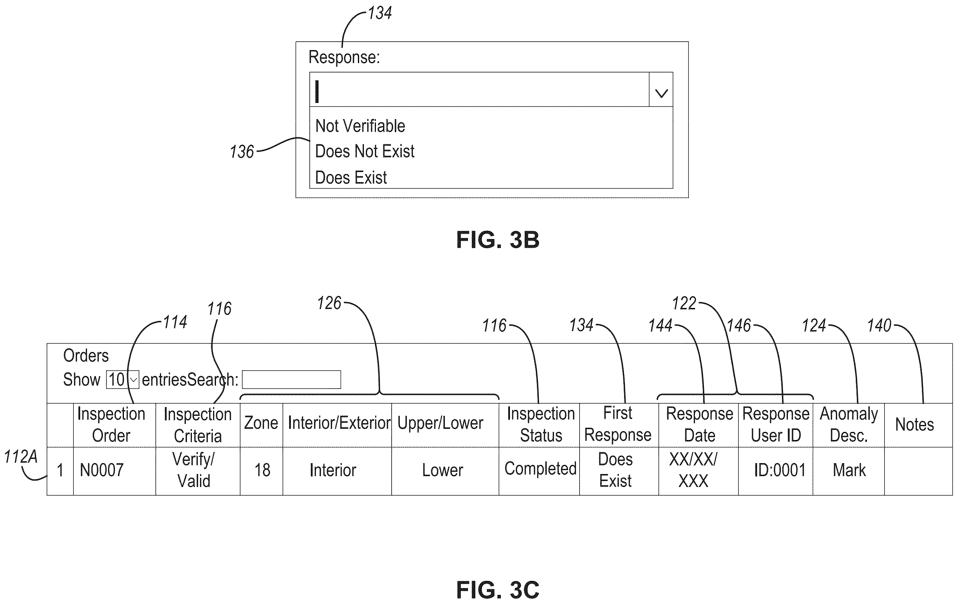

Specifically, as shown in Figure 2, the inspection interface illustrates a plurality of inspection orders 112. Each inspection order 112 includes inspection order-specific data to facilitate anomaly tracking, inspection order management, and traceability. Such data may include, without limitation, an inspection order identifier 114 configured to uniquely identify the inspection order, inspection status information 116 indicating a current status of the inspection order (for example, active, completed, incomplete, queued), and, in some examples, inspection order revision information 118 (see, e.g., Figure 3) to track updates or modifications to the inspection order over time.

Each inspection order 112 is associated with a corresponding anomaly via anomaly identification data, which may include a unique anomaly identifier (not shown). In some examples, an inspection order identifier and an anomaly identifier associated with the inspection order may be the same or different, depending on how anomalies and inspection orders are tracked within a particular implementation. Each inspection order 112 may further include anomaly-related information associated with the anomaly, such as anomaly description information 124 and anomaly location information 126. The anomaly location information 126 may specify a component-level location, zone-level location, placement classification, or other locational reference associated with the structure. For example, when the structure is an aircraft, the anomaly location information 126 may identify a particular fuselage section, indicate whether the anomaly is located on an exterior or interior surface or in an upper or lower region, and specify a location using standardized aerospace reference coordinates.

In general, an inspection order 112 is associated with a single anomaly such that each reported anomaly corresponds to an individual inspection order. However, in some examples, a single inspection order 112 may be associated with a plurality of anomalies, such as when similar anomaly conditions occur at multiple locations on a structure or across a group of related components. In such cases, the inspection order 112 may reference multiple anomalies to support coordinated inspection activities and consistent handling of related anomaly conditions. In some examples, the structured inspection management system 100 organizes anomaly-related information associated with inspection orders in a standardized format, reducing ambiguity and enabling consistent handling of inspection criteria, inspection responses, and inspection status.

As further shown in Figure 2, inspection orders are associated with predefined sets of structured inspection responses that are selectable in connection with inspection activities. In the example shown, the inspection interface presents one or more response fields 134 corresponding to different inspection contexts or inspection phases. For example, a first response field 134A may be associated with a predefined set of structured inspection responses indicative of whether a condition associated with an anomaly exists. Such structured inspection responses may include, without limitation, responses indicative that a condition does not exist, could not be verified, or does exist. Prior to performance of the inspection, the response field 134A may be unpopulated. Following performance of the inspection, the response field 134A is populated with a selected structured inspection response chosen from the predefined set. A second response field 134B may be associated with a predefined set of structured inspection responses indicative of acceptance or rejection of a condition of the anomaly following corrective action. Similar to the first response field, the second response field 134B may remain unpopulated until the corresponding inspection phase is reached and the inspection is performed, at which point the response field 134B is populated with a selected structured inspection response from the predefined set. The response fields and structured inspection responses shown in Figure 2 are provided as one non-limiting example. In other examples, different response fields, response values, or response hierarchies may be defined based on inspection criteria, inspection phase, or operational context. By enforcing selection from predefined structured inspection responses for each response field, the structured inspection management system 100 ensures that inspection input is captured in a consistent, non-ambiguous, and system-interpretable manner. This structured response enforcement enables system-driven inspection status determination and tracking.

In some examples the structured inspection management system 100 further includes one or more traceability fields 122 associated with inspection orders and structured inspection responses. The traceability fields 122 are configured to store traceability data enabling identification of at least one of a source or timing of a structured inspection response selected via the response enforcement module 106. In some examples, the traceability data includes timing information 144 indicating when a structured inspection response was selected or recorded, such as a date, time, or system-generated timestamp. In some examples, the traceability data additionally or alternatively includes source information 146 identifying a source associated with the structured inspection response, such as a user identifier, role identifier, or other system-recognized identifier associated with entry of the response.

The traceability fields 122 may be presented within the inspection interface of Figure 2, stored as metadata associated with the inspection order, or both. The specific form, number, and arrangement of traceability fields are implementation-dependent and may vary without departing from the scope of the disclosure. In this manner, the structured inspection management system 100 enables traceable association of structured inspection responses with inspection activity while maintaining flexibility across digital or manual workflows.

In some examples, the inspection interface may further include one or more supplemental input fields 140 associated with the inspection order, such as a notes field. Such supplemental input fields 140 may allow entry of contextual or reference information related to the inspection or corrective action. However, these supplemental fields are separate from the response field 134 and do not define allowable inspection outcomes. Inspection status determination is based on the selected structured inspection response rather than freeform supplemental input.

In some examples, the structured inspection management system 100 enables retrieval of inspection orders from the plurality of inspection orders 112 using a search interface 128. The search interface 128 may allow filtering or locating inspection orders based on predefined inspection order attributes, such as inspection order identifiers, inspection status values, or anomaly-related information associated with the inspection orders. This capability supports efficient navigation and management of inspection orders, particularly in environments involving large numbers of anomalies.

Referring to Figure 3A, an example inspection interface of a selected inspection order 112A, in a digital workflow mode, is shown. The inspection interface illustrates access to the selected inspection order via the structured inspection management system 100. As shown, the selected inspection order 112A includes inspection order-related information associated with the selected inspection order, including anomaly location information 126, inspection status information 116, and inspection order revision information 118. The inspection interface further includes inspection criteria 120 associated with the selected inspection order. The inspection criteria define one or more requirements for performance of an inspection associated with the anomaly and may be presented directly within the display or via linked or referenced inspection documentation associated with the inspection order. The inspection criteria provide the basis for evaluating the anomaly during performance of the inspection.

The selected inspection order 112A also includes a response field 134. The response field 134 defines allowable input for the inspection order by being associated with a predefined set of structured inspection responses applicable to performance of the inspection. The response field 134 restricts inspection input to selection from the predefined set of structured inspection responses and prevents entry of freeform or unstructured inspection responses. Prior to performance of the inspection, the response field 134 may be unpopulated. Following performance of the inspection, the response field 134 is populated with a selected structured inspection response chosen from the predefined set. As shown in Figure 3A, the response field 134 is selectable to show the predefined set of structured inspection responses in the form of a drop-down menu, as described in further detail in Figure 3B. In other examples, the predefined set of structured inspection response may be presented in other selectable formats, including, without limitation, presenting all available response options concurrently with selectable checkboxes, radio buttons, or similar selection mechanisms. Regardless of presentation format, the response field 134 enforces restriction of allowable input to the predefined set of structured inspection responses. In some examples, different response fields may be presented at different stages of an inspection order, each response field being associated with a different predefined set of structured inspection responses corresponding to a particular inspection phase.

Referring now to Figure 3B, the predefined set of structured inspection responses 136 are shown associated with the response field 134. The predefined set of structured inspection responses 136 defines all allowable inspection input for the response field 134 and is determined based on at least one of the inspection criteria associated with the inspection order or an inspection phase corresponding to performance of the inspection. Upon selection of at least one structured inspection response from the predefined set, the selected structured inspection response is received by the structured inspection management system 100 and stored in association with the response field 134 of the selected inspection order 112A. The selected structured inspection response represents an inspection outcome corresponding to performance of the inspection and is used by the structured inspection management system 100 for subsequent inspection status determination.

As shown in Figure 3C, the inspection interface illustrates a selected structured inspection response being entered for the selected inspection order. Upon selection of the structured inspection response, the response enforcement module 106 receives and stores the selected structured inspection response in association with the inspection order. Based on the selected structured inspection response, the status tracking module 108 automatically determines an inspection status for the inspection order and updates the inspection status information 116 without requiring freeform interpretation or manual status assignment. As illustrated, inspection status information 116 is updated to reflect completion of the inspection order based on the selected structured inspection response. In other examples, different inspection status outcomes may be automatically determined depending on the selected structured inspection response and, in some cases, an inspection phase associated with the inspection order. In this manner, the structured inspection management system 100 ensures that inspection status is system-determined based on structured inspection input, thereby reducing ambiguity and promoting consistent inspection status tracking across inspection orders and workflows.

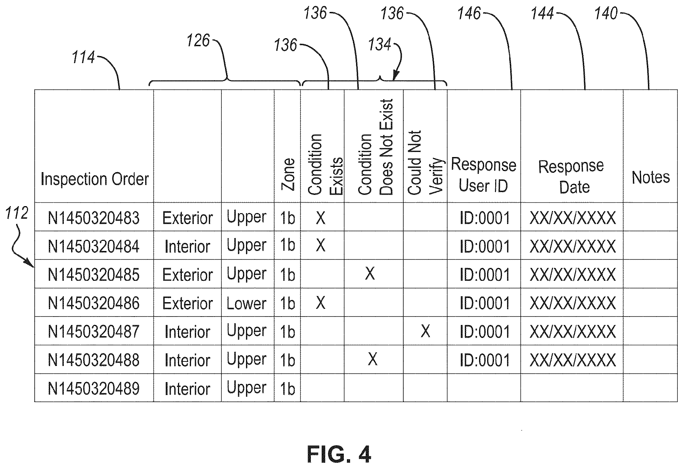

Referring to Figure 4, an example of a manual workflow mode is illustrated, in which inspection activities are supported using a physical inspection record rather than an electronic inspection interface. In the manual workflow mode, inspection criteria 120 associated with an inspection order are provided on a physical inspection record, such as a printed inspection sheet, form, or checklist, which is made available to an inspector for use during performance of the inspection on the structure. The physical inspection record further includes one or more response fields 134 corresponding to predefined sets of structured inspection responses 136 applicable to performance of the inspection. The response fields 134 on the physical inspection record define allowable inspection input in the same manner as the response field 134 described with respect to Figures 3A-3C, by restricting inspection input to selection from the predefined set of structured inspection responses and preventing entry of freeform or unstructured inspection responses. The predefined set of structured inspection responses 136 may be presented on the physical inspection record as checkboxes, selection columns, marked fields, or other structured selection mechanisms.

Following performance of the inspection, at least one selected structured inspection response recorded on the physical inspection record is subsequently entered into the structured inspection management system 100 via an electronic interface. The response enforcement module 106 receives and stores the selected structured inspection response in association with the corresponding inspection order and the status tracking module 108 automatically determines and updates the inspection status information 116 for the inspection order in the same manner as described with respect to the digital workflow mode.

In this manner, the structured inspection management system 100 maintains consistent enforcement of allowable inspection input and system-driven inspection status determination across both digital and manual workflow modes. Although inspection activities may be performed using physical inspection records in the manual workflow mode, inspection outcomes are standardized through the use of predefined sets of structured inspection responses and are ultimately captured electronically to support consistent inspection status tracking, traceability, and downstream processing.

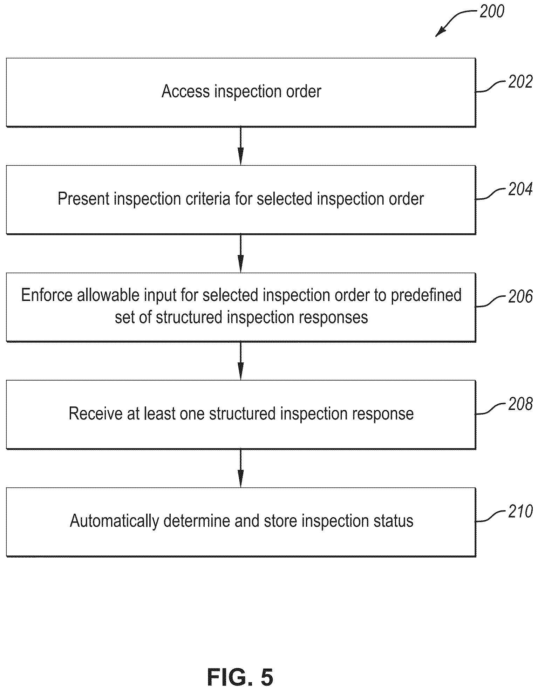

Referring now to Figure 5, a method 200 for structured anomaly inspection management is illustrated. The method 200 may be performed using the structured inspection management system described herein and is applicable to both digital and manual workflow modes. At block 202, the method 200 includes accessing, via the structured inspection management system, a selected inspection order associated with an anomaly from a plurality of inspection orders. The selected inspection order defines inspection criteria for performing an inspection associated with the anomaly. At block 204, the inspection criteria for the selected inspection order are presented. The inspection criteria defines one or more requirements against which performance of the inspection is evaluated and may be presented via an electronic interface, a physical inspection record, or a combination thereof.

At block 206, the method 200 includes enforcing restriction of allowable input for the selected inspection order to a predefined set of structured inspection responses associated with performance of the inspection. Enforcing restriction of allowable input prevents entry of freeform or unstructured inspection responses and ensures that inspection input is captured in a standardized and system-interpretable form. At block 208, the method 200 includes receiving at least one structured inspection response selected from the predefined set of structured inspection responses for the selected inspection order. The at least one structured inspection response represents an inspection outcome corresponding to performance of the inspection. At block 210, the method 200 includes automatically determining and storing an inspection status for the selected inspection order based on the at least one structured inspection response, without requiring manual interpretation of inspection outcomes. The inspection status is system-determined without requiring manual interpretation or assignment by a user.

When the inspection status indicates that the anomaly remains unresolved, the method 200 includes maintaining the selected inspection order in an incomplete state for subsequent inspection or corrective action. In this manner, unresolved anomalies remain tracked and available for further action until inspection outcomes indicate resolution. The method 200 thereby provides a structured, non-ambiguous inspection workflow in which inspection input is restricted to predefined structured inspection responses and inspection status is automatically determined based on those responses, promoting consistency, traceability, and repeatability across inspection activities and environments.

In some examples, the method further comprises making inspection results available for review, summarization, or export after determining and storing the inspection status for the selected inspection order. The inspection results may include inspection order identifiers, inspection status information, selected structured inspection responses, and associated traceability data. The method may further include exporting the inspection results in one or more structured data formats to enable use with external reporting tools, quality systems, or data analysis platforms. These additional actions may be performed without altering enforcement of allowable inspection input or system-driven inspection status determination described herein.

In some examples, the operations of method 200 may be implemented as computer-executable instructions stored on a non-transitory computer-readable medium and executed by one or more processors of the structured inspection management system. Execution of the instructions causes the one or more processors to perform the operations described with respect to Figure 5, including accessing inspection orders, enforcing restriction of allowable input to predefined structured inspection responses, receiving selected inspection responses, and automatically determining and storing inspection status.

In the above description, certain terms may be used such as "up," "down," "upper," "lower," "horizontal," "vertical," "left," "right," "over," "under" and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two." Moreover, unless otherwise noted, as defined herein a plurality of particular features does not necessarily mean every particular feature of an entire set or class of the particular features.

The term "about" or "substantially" in some examples, is defined to mean within +/-5% of a given value, however in additional examples any disclosure of "about" may be further narrowed and claimed to mean within +/- 4% of a given value, within +/-3% of a given value, within +/- 2% of a given value, within +/- 1% of a given value, or the exact given value. Further, when at least two values of a variable are disclosed, such disclosure is specifically intended to include the range between the two values regardless of whether they are disclosed with respect to separate examples or examples, and specifically intended to include the range of at least the smaller of the two values and/or no more than the larger of the two values. Additionally, when at least three values of a variable are disclosed, such disclosure is specifically intended to include the range between any two of the values regardless of whether they are disclosed with respect to separate examples or examples, and specifically intended to include the range of at least the A value and/or no more than the B value, where A may be any of the disclosed values other than the largest disclosed value, and B may be any of the disclosed values other than the smallest disclosed value.

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The schematic flow chart diagrams included herein are generally set forth as logical flow chart diagrams. As such, the depicted order and labeled steps are indicative of one example of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

Many of the functional units described in this specification have been labeled as modules, to more particularly emphasize their implementation independence. For example, a module may be implemented as a hardware circuit comprising custom very large scale integrated ("VLSI") circuits or gate arrays, off-the-shelf semiconductors such as logic chips, transistors, or other discrete components. A module may also be implemented in programmable hardware devices such as a field programmable gate array ("FPGA"), programmable array logic, programmable logic devices or the like.

Modules may also be implemented in software for execution by various types of processors. An identified module of program code may, for instance, comprise one or more physical or logical blocks of computer instructions which may, for instance, be organized as an object, procedure, or function. Nevertheless, the executables of an identified module need not be physically located together but may comprise disparate instructions stored in different locations which, when joined logically together, comprise the module and achieve the stated purpose for the module.

Indeed, a module of program code may be a single instruction, or many instructions, and may even be distributed over several different code segments, among different programs, and across several memory devices. Similarly, operational data may be identified and illustrated herein within modules and may be embodied in any suitable form and organized within any suitable type of data structure. The operational data may be collected as a single data set or may be distributed over different locations including over different storage devices, and may exist, at least partially, merely as electronic signals on a system or network. Where a module or portions of a module are implemented in software, the program code may be stored and/or propagated on in one or more computer readable medium(s).

The computer program product may include a computer readable storage medium (or media) having computer readable program instructions thereon for causing a processor to carry out aspects.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory ("RAM"), a read-only memory ("ROM"), an erasable programmable read-only memory ("EPROM" or Flash memory), a static random access memory ("SRAM"), a portable compact disc read-only memory ("CD-ROM"), a digital versatile disk ("DVD"), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations may be assembler instructions, instruction-set-architecture ("ISA") instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider). In some examples, electronic circuitry including, for example, programmable logic circuitry, field-programmable gate arrays ("FPGA"), or programmable logic arrays ("PLA") may execute the computer readable program instructions by utilizing state information of the computer readable program instructions to personalize the electronic circuitry, in order to perform aspects.

Aspects are described herein with reference to flowchart illustrations and/or block diagrams of methods, apparatus (systems), and computer program products according to examples. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and computer program products according to various examples. In this regard, each block in the schematic flowchart diagrams and/or schematic block diagrams may represent a module, segment, or portion of code, which comprises one or more executable instructions of the program code for implementing the specified logical function(s).

Although various arrow types and line types may be employed in the flowchart and/or block diagrams, they are understood not to limit the scope of the corresponding examples. Indeed, some arrows or other connectors may be used to indicate only the logical flow of the depicted example. For instance, an arrow may indicate a waiting or monitoring period of unspecified duration between enumerated steps of the depicted example. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and program code.

The present subject matter may be embodied in other specific forms without departing from essential characteristics. The described examples are to be considered in all respects only as illustrative and not restrictive. All changes which come within the meaning and range of equivalency of the claims are to be embraced within their scope.

## Claims

1. A structured inspection management system (100) comprising:
an inspection organization module (102) configured to organize a plurality of inspection orders (112), wherein each inspection order (112) is associated with an anomaly and defines inspection criteria (120) for performing an inspection associated with the anomaly;
a display module (104) configured to present, for a selected inspection order (112A) of the plurality of inspection orders (112), the inspection criteria (120) associated with the selected inspection order (112A);
a response enforcement module (106) configured to restrict user input for the selected inspection order (112A) to a predefined set of structured inspection responses (136) associated with performance of the inspection; and
a status tracking module (108) configured to automatically determine and store an inspection status (116) for the selected inspection order (112A) based on at least one structured inspection response (136) selected via the response enforcement module (106).

2. The structured inspection management system (100) of claim 1, further comprising a traceability module (110) configured to record, for each structured inspection response selected via the response enforcement module (106), traceability data (122) enabling identification of at least one of a source or timing of the structured inspection response.

3. The structured inspection management system (100) of claim 1 or 2, wherein in a manual workflow mode:
the inspection criteria (120) and the predefined set of structured inspection responses (136) are provided on a physical inspection record;
at least one structured inspection response (136) recorded on the physical inspection record is later entered into the response enforcement module (106) via an electronic interface; and
the inspection status (116) is determined based on the at least one structured inspection response (136) received via the electronic interface.

4. The structured inspection management system (100) of any one of the preceding claims, wherein in a digital workflow mode:
the inspection criteria (120) and the predefined set of structured inspection responses (136) are presented via an electronic interface; and
the inspection status (116) is determined based on the at least one structured inspection response (136) received via the electronic interface.

5. The structured inspection management system (100) of any one of the preceding claims, wherein:
each one of the plurality of inspection orders (112) has a plurality of inspection phases; and
the response enforcement module (106) restricts the predefined set of structured inspection responses (136) corresponding to a current inspection phase.

6. The structured inspection management system (100) of claim 5, wherein:
one of the plurality of inspection phases comprises an initial inspection phase; and
the predefined set of structured inspection responses (136) corresponding to the initial inspection phase includes responses indicative of whether a condition associated with the anomaly exists.

7. The structured inspection management system (100) of claim 5, wherein:
one of the plurality of inspection phases comprises a resolution inspection phase following corrective action; and
the predefined set of structured inspection responses (136) corresponding to the resolution inspection phase includes responses indicative of acceptance or rejection of a condition of the anomaly.

8. The structured inspection management system (100) of claim 5, wherein the status tracking module (108) determines the inspection status (116) based on the at least one structured inspection response (136) and the current inspection phase of the selected inspection order (112A).

9. The structured inspection management system (100) of any one of the preceding claims, wherein the status tracking module (108) is configured to maintain the selected inspection order (112A) in an incomplete state when the at least one structured inspection response indicates that the anomaly remains unresolved.

10. The structured inspection management system (100) of any one of the preceding claims, wherein each inspection order of the plurality of inspection orders (112) is associated with the anomaly via anomaly identification data comprising a unique anomaly identifier.

11. The structured inspection management system (100) of any one of the preceding claims, wherein each inspection order of the plurality of inspection orders (112) is associated with anomaly-related information comprising anomaly identification information, anomaly description information (124), and anomaly location information (126); or optionally wherein:
the inspection organization module (102) is further configured to populate the plurality of inspection orders (112) from a plurality of data sources; and
the plurality of data sources includes at least one of locally stored data, manually uploaded data, or externally retrieved data; or optionally wherein:
the display module (104) is further configured to present inspection visual data associated with the anomaly; and
the inspection visual data comprises at least one of images, diagrams, or maps.

12. A method (200) for structured anomaly inspection management, the method (200) comprising:
accessing (202), via a structured inspection management system (100), a selected inspection order (112A) associated with an anomaly from a plurality of inspection orders (112), wherein the selected inspection order (112A) defines inspection criteria (120) for performing an inspection associated with the anomaly;
presenting (204) the inspection criteria (120) for the selected inspection order (112A);
enforcing (206) restriction of allowable input for the selected inspection order (112A) to a predefined set of structured inspection responses (136) associated with performance of the inspection;
receiving (208) at least one structured inspection response selected from the predefined set of structured inspection responses (136) for the selected inspection order (112A); and
automatically (210) determining and storing an inspection status (116) for the selected inspection order (112A) based on the at least one structured inspection response;
wherein, when the inspection status (116) indicates that the anomaly remains unresolved, maintaining the selected inspection order (112A) in an incomplete state for subsequent inspection or corrective action.

13. The method (200) of claim 12, further comprising recording traceability data (122) associated with receiving the at least one structured inspection response.; and optionally wherein the traceability data (122) comprises
at least one of a source or timing of the at least one structured inspection response received for the selected inspection order (112A).

14. The method (200) of claim 12, wherein:
the selected inspection order (112A) has a plurality of inspection phases; and
enforcing restriction of allowable input comprises enforcing selection from a predefined set of structured inspection responses (136) corresponding to a current inspection phase; or optionally
further comprising tracking a number of inspection attempts associated with the selected inspection order (112A), each inspection attempt corresponding to receipt of at least one structured inspection response for the selected inspection order (112A).; or optionally
wherein enforcing restriction of allowable input comprises preventing entry of freeform inspection responses.

15. A computer-readable medium storing instructions that, when executed by one or more processors, causes the one or more processors to perform a method for structured anomaly inspection management, the method comprising:
accessing a selected inspection order (112A) associated with an anomaly from a plurality of inspection orders (112), wherein the selected inspection order (112A) defines inspection criteria (120) for performing an inspection associated with the anomaly;
presenting the inspection criteria (120) for the selected inspection order (112A);
enforcing restriction of allowable input for the selected inspection order (112A) to a predefined set of structured inspection responses (136) associated with performance of the inspection;
receiving at least one structured inspection response selected from the predefined set of structured inspection responses (136) for the selected inspection order (112A); and
automatically determining and storing an inspection status (116) for the selected inspection order (112A) based on the at least one structured inspection response;
wherein, when the inspection status (116) indicates that the anomaly remains unresolved, maintain the selected inspection order (112A) in an incomplete state for subsequent inspection or corrective action.
